# EUROPÄISCHE PATENTSCHRIFT

(11) **EP 1 977 891 B1**
(45) Veröffentlichungstag und Bekanntmachung des Hinweises auf die Patenterteilung: **21.08.2013**
(21) Anmeldenummer: 08075280.1
(22) Anmeldetag: 04.04.2008
(51) Int. Cl.: B32B 37/26, B32B 38/10, B32B 38/06

(54) **Verfahren zur Herstellung von Kavitäten in Sicherheitsdokumenten, insbesondere Chipkarten**
Method for creating cavities in secure documents, in particular chip cards
Procédé de fabrication de cavités dans des documents de sécurité, en particulier des cartes à puce

(30) Priorität: 04.04.2007 DE 102007016779
(43) Veröffentlichungstag der Anmeldung: 08.10.2008
(60) Teilanmeldung: 13003116.4
(73) Patentinhaber: Bundesdruckerei GmbH, 10958 Berlin (DE)
(72) Erfinder: Plughoefft, Malte Dr., 13347 Berlin (DE); Fischer, Jörg, 13053 Berlin (DE)
(74) Vertreter: Seuss, Thomas

(56) Entgegenhaltungen:
- JP-A- 2 112 998
- NL-A- 9 301 764
- US-A- 6 036 099

## Beschreibung

### Gebiet der Erfindung

Die Erfindung betrifft ein Verfahren zur Herstellung von Wert- oder Sicherheitsdokumenten, wie z.B. Personalausweise, Reisepässe, Führerscheine, Zutrittskarten, Berechtigungsausweise, Telefonkarten, Krankenkassenkarten, Kreditkarten, Scheckkarten oder Sicherheitsausweisen mit Kavitäten zur späteren Einarbeitung von Modulen, wie z.B. Speichermodulen, Mikroprozessoren, Displaymodulen, RFID-Modulen oder anderen.

### Stand der Technik und Hintergrund der Erfindung

Aus dem Stand der Technik sind Dokumente des Wert- und Sicherheitsdrucks, zum Beispiel Personalausweise, Reisepässe, Führerscheine, Zutrittskarten, Berechtigungsausweise, Telefonkarten, Krankenkassenkarten, Kreditkarten, mit eingearbeiteten Modulen, wie z.B. Speichermodulen, Mikroprozessoren, RFID-Modulen oder Displaymodulen bekannt. Bei der Herstellung derartiger Dokumente stellt sich das Problem, das entsprechende Modul in den Kartenkörper einzuarbeiten. Sicherheitskarten bestehen nach dem Stand der Technik aus wenigstem einem Kunststoff mit hoher Erweichungstemperatur, welche größer 100 °C, bevorzugt größer 120 °C, besonders bevorzugt größer 140 °C liegt. Diese sind besonders bevorzugt monolithisch aus einem Material aufgebaut, können aber auch verschiedene Materialien enthalten. Hierbei kommen vor allem Polyethylentherephthalat und dessen Derivate sowie besonders bevorzugt Polycarbonate, insbesondere Bisphenol-A-Polycarbonat, zum Einsatz. Entsprechende Kartenaufbauten sind dem Fachmann aus dem Stand der Technik vertraut. Weitere Materialien, die zum Einsatz kommen sind die einschlägig bekannten thermoplastisch verarbeitbaren Kunststoffe wie Polyvinylchlorid, Acrylnitril-Butadien-Styrol, oder Verbundmaterialien wie Teslin.

Nach dem Stand der Technik werden zum Beispiel Dual Interface Chipkarten in der Art hergestellt, dass zunächst ein Kartenkörper mit einer Antenne hergestellt wird. In diesen wird dann eine Kavität gefräst. Hierbei wird mittels einer Kontaktmessung überprüft, wann der Fräskopf die Antenne, bzw. die Kontaktflächen der Antenne erreicht hat. Dann wird der Fräsvorgang gestoppt und der Chip mit der Kontaktfläche in die Kavität eingeklebt.

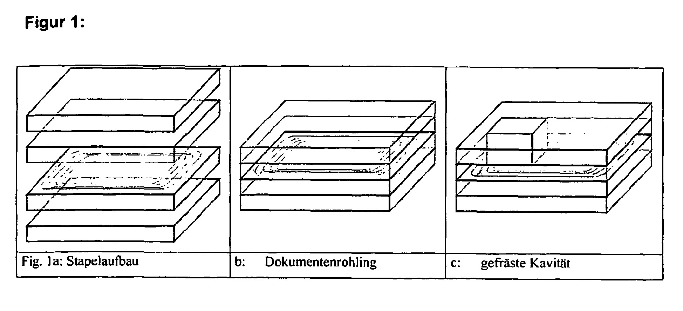

Dieser langsame und aufwändige Prozess ist in Figur 1 dargestellt. Zunächst werden, wie in Figur 1a dargestellt, verschiedene Folien zusammengetragen. Üblicherweise werden 2 bis 12, für Sicherheitskarten bevorzugt 6 bis 8 Folien verwendet. Diese sind entsprechend bedruckt und können mit verschiedenen Sicherheitsmerkmalen versehen sein. Zum Beispiel können die hier hell dargestellten Folien unten und oben transparente Folien sein, während die beiden mittleren dunkel dargestellten opak ausgeführt sein können. Zusätzlich können zum Beispiel auch Sicherheitsfäden eingelegt sein. Eine der Folien weist eine Antenne auf, welche in der Abbildung schematisch dargestellt ist. Nach der Lamination ergibt sich ein Kartenkörper, dargestellt in b. Die Antenne befindet sich in diesem Beispiel in der Mitte der Karte. Zur Kontaktierung wird nun eine Kavität gefräst wie oben beschrieben. Es ergibt sich der in c gezeigte Hohlraum, in welchen ein Modul implantiert werden kann.

Weiterhin ist aus dem Stand der Technik bekannt, dass Karten, zum Beispiel im ID1 Format (Checkkartenformat) in einem so genannten Multinutzen hergestellt werden. Hierbei werden Bögen mit mehreren Karten hergestellt und anschließend die Karten einzeln ausgestanzt. Dieser Prozess wird als Vereinzelung bezeichnet.

Aus den Dokumenten US 6,036,099 A und NL 9301764 A sind Verfahren zur Herstellung von Kavitäten in Rohlingen für Dokumente bekannt.

### Technisches Problem der Erfindung

Wie aus dem beschriebenen Prozeß ersichtlich, ist die Anfertigung von Dokumenten, die eine Kavität aufweisen langsam und aufwändig. Aufgrund des zunehmenden Bedarfs derartige Dokumente besteht ein großes Interesse an Verfahren, die schneller und weniger aufwändig durchzuführen sind.

### Grundzüge der Erfindung und bevorzugte Ausführungsformen

Es wurde nun gefunden, dass nach dem in dieser Schrift beschriebenen Verfahren, die erforderlich Kavität zur Implantation eines Moduls ausgestanzt werden kann. Hierbei darf die Karte nicht auf der gesamten Dicke gestanzt werden, da sonst ein Loch in der Karte entstünde. Wenn hingegen nur ein Teil der Dicke gestanzt wird, so löst sich der herauszunehmende Teil nicht aus der Karte, da dieser auf der Unterseite mit dem Dokument noch verbunden ist. Um dieses zu verhindern, wird nun vor der Lamination eines solchen Dokuments an dieser Stelle eine Trennschicht in den Dokumentenaufbau eingebracht, so dass nach einer Stanzung der entsprechende Teil entfernbar ist, so dass sich eine Kavität zur Implantation eines Moduls ergibt. Es ist klar, dass die eingebrachte Trennschicht nicht bis an den Rand des Dokumentes reichen darf.

Gegenstand der Erfindung ist daher ein Verfahren nach Anspruch 1.

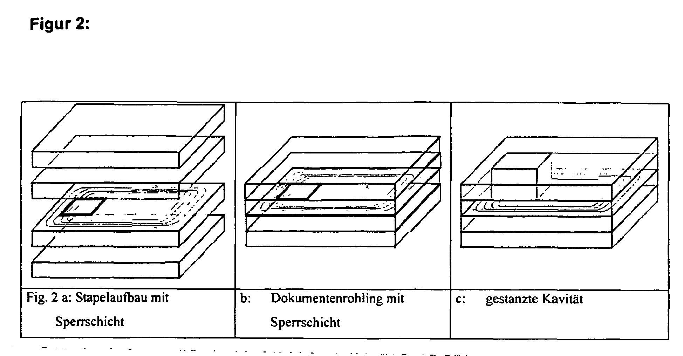

Das erfindungsgemäße Verfahren zur Herstellung von Kavitäten ist in Figur 2 dargestellt. Der Schichtaufbau aus Folien erfolgt zunächst analog Figur 1, jedoch wird an der Stelle der später gewünschten Kavität, zum Beispiel oberhalb einer eventuell vorhandenen Antenne, eine Trennfolie in passender Größe eingelegt, welche aus einem Material besteht, das sich nicht mit dem Polymer der Folie verbindet, d.h. Aluminium-, Silikon-, Teflon- oder Polyimidfolie, oder eine Folie mit einer speziellen Beschichtung. Nach Lamination in üblicher Weise mittels Laminiertechnik in einer Heiz-Kühl-Presse bei einer Temperatur bis zu etwa 200°C und bei Druck von etwa 300 bis 500 N/cm² im Heizpresszyklus und etwa 500 bis 700 N/cm² im Kaltpresszyklus ergibt sich ein Dokumentenrohling, wie in Fig. 2 b zu erkennen, bei dem die Trennschicht oberhalb der Antenne einlaminiert ist. Wird nun mit einem geeigneten Stanzwerkzeug eine Stanzung vorgenommen, bei der die Größe der Stanzwerkzeuges exakt der Größe der gewünschten Kavität entspricht, kann diese herausgestanzt werden, wie in Figur 2 c schematisch zu erkennen.

Besonders bevorzugt aber nicht notwendiger Weise erfolgt diese Stanzung bei der Vereinzelung der Karte. In diesem Fall muss das Stanzwerkzeug derart konstruiert sein, dass die Stanzkante zum Ausstanzen der Außenkante der Karte um die Dicke der Folien, welche nicht ausgestanzt werden sollen, tiefer ist als das Werkzeugteil, welches die Kavität ausstanzt.

Die Verfahren des Laminierens und Stanzens sind dem Fachmann auf dem Gebiet wohlvertraut und bedürfen an dieser Stelle keiner weiteren Erörterung.

## Patentansprüche

1. Verfahren zur Herstellung eines Sicherheits- oder Wertdokumentes enthaltend einen Kartenkörper bestehend aus mehreren Kunststoffschichten mit hoher Erweichungstemperatur in der sich mindestens eine Kavität zur späteren Einbettung mindestens eines weiteren Moduls befindet, wobei
a) an mindestens einer Stelle zwischen den Kunststoffschichten eine Trennschicht eingebracht wird, wobei die Trennschicht nicht bis an den Rand des Dokumentes reicht,
b) die Kunststoffschichten und die Trennschicht miteinander laminiert werden und
c) anschließend genau oberhalb der Trennschicht die gewünschte Kavität duch Ausstanzen erzeugt wird,
**dadurch gekennzeichnet,**
**dass** die Trennschicht aus einer Aluminium-, Silikon-, Teflon- oder Polyimidfolie oder einer beschichteten Folie besteht.

## Claims

1. A method for producing a security or value document comprising a card body consisting of multiple plastic layers having a high softening temperature, wherein at least one cavity is provided for later embedding at least one further module, wherein
a) a separating layer is integrated at least at one position between the plastic layers, said separating layer not extending up to the edge of the document,
b) the plastic layers and the separating layer are laminated together, and
c) thereafter precisely above the separating layer, the desired cavity is made by punching out, **characterized in**
**that** the separating layer consists of an aluminum, silicone, Teflon or polyimide film or of a coated film.

## Revendications

1. Procédé de fabrication d'un document de sécurité ou de valeur comprenant un corps de carte consistant en plusieurs couches en matière plastique avec une haute température de ramollissement, dans lequel se trouve au moins une cavité pour l'intégration ultérieure d'au moins un autre module, dans lequel
a) à au moins une position entre les couches en matière plastique, une couche de séparation est intégrée, la couche de séparation ne s'étendant pas jusqu'au bord du document,
b) les couches en matière plastique et la couche de séparation sont stratifiées ensemble, et
c) après la cavité désirée est faite par poinçonnage exactement au-dessus de la couche de séparation,
**caractérisé en ce**
**que** la couche de séparation consiste en un film d'aluminium, silicium, Téflon ou polyimide ou en un film revêtu.
